# EUROPEAN PATENT APPLICATION

(11) **EP 1 562 163 A1**
(43) Date of publication of application: **10.08.2005**
(21) Application number: 05462001.8
(22) Date of filing: 17.01.2005
(51) Int. Cl.: G09B 5/06, G09B 19/06

(54) **Method of teaching foreign languages or producing teaching aid**

(30) Priority: 05.02.2004 HU 0400355
(71) Applicant: Ackermann, Zoltan Peter, H-1224 Budapest (HU)
(72) Inventor: Ackermann, Zoltan Peter, H-1224 Budapest (HU)

(57) **Abstract**

The method specified in this invention results such specially cut films or films that are played on such a special way that allows a language learner to watch a foreign language film and understand all moments of the film while easily learn the expressions, phrases and vocabulary of the foreign language. The essence of the method is to cut the language teaching relevant parts of the film into short, approximately 10 seconds long segments and play these segments twice right after each other. The second play uses the foreign language while the first is the language that is well known by the learner.

The example shown in the attached figure illustrates how the educational film (TF) is created from the "A" language (AF) and "B" language (BF) versions of the same film with the method specified in this invention.

## Description

The present invention relates to the field of audio-visual language teaching. It is such a method that is applicable for foreign language teaching and for the production of foreign language-teaching tools. The described method enriches the set of available language-teaching aids and makes language learning more interesting and effective. The major application areas of the invention are self-education and manufacturing of language-teaching aids.

Nowadays the most typical language teaching accessories are voice records prepared for specific language books. There are additional accessories like subtitled films; DVDs with different language channels and TV program based language-teaching lessons. There are several software products also available for language learners, which help to learn grammar and extend vocabulary. Probably the closest patent to the present invention is the HU 216 040 B method, which has been filed on 3^{rd} April 1995. The referred patent suggests the simultaneous playback of words and their translation as an effective method of language learning.

Based on our experience we would like to emphasize two important attributes of an effective language-teaching aid: keep the learners focused and make the comprehension of the subject as easy and comfortable as possible. The sustained interest and the ease of understanding can significantly increase the learning capacity of a learner and increase the effectiveness of learning.
The voice records coming with language books are excellent accessories of the lessons as they help to learn the pronunciation and practice grammatical structures. Incontestable disadvantage of these kinds of aids is that they are not able to keep longer attention of the learners because they require high level, tiring concentration for proper understanding. These materials are designed to deepen the subject of a specific lesson so they are typically short and often artificial. Although subtitled films are longer and in case of successful choice they preserve the attention of the learners they cannot take considerable role in language teaching. The primary reason of this is that the most people are unable to simultaneously read, understand the story and concentrate on the pronunciation. As we receive most of the understood information visually the foreign speech and pronunciation gets almost completely lost in case of subtitled films. Those films, which are speaking a foreign language without having subtitles, can support those learners only who already have a high level knowledge of the specific foreign language.

A method that places the learner into a foreign language environment with the feeling of understanding foreign speech would be a significant step forward on the way of language teaching. In order to reach this aim we have to let the learner know the content of the passing sentences in advance without requiring too much effort. The learner's interest can be focused and the mind is able to easily learn new phrases and words because the learner already knows what will happen, what people will say and he/she has to focus only on the way of expression. The recognition of the above-mentioned goal encouraged us to find a solution and finally lead to the present invention. We identified the task on the following way: the target is the development of such a method that directly or indirectly makes it possible to keep the learners steadily focused while they are learning a language continuously with joy and as few effort as possible. Two fundamental possibilities were recognized during the development of the solution. The first is the huge amount of available dubbed films and DVDs that provide an unlimited resource of keeping learners interested. The other is an inventive step that makes it possible to develop the solution. This is the way in which the meaning of the sentences is shown to the learners: first we play the film fragment that contains the group of sentences of the current thought on a language that is well known by the learner.

The essence of the method covered by this invention is that we play or modify a film or a film fragment on the following way: we cut those parts of the film that are important from the point of view of language teaching into short segments. These segments are played twice. The second play of a segment comes immediately after the first one but it is played on another language. So the most important difference between the first and second play of a segment is the used language. Our experience showed that a segment should be shorter than 20 seconds otherwise the learner is unable to connect the expression and its translation.

The major advantage of the invented solution over the background art is the possibility to provide practically unlimited amount of interesting language teaching material for language learners.

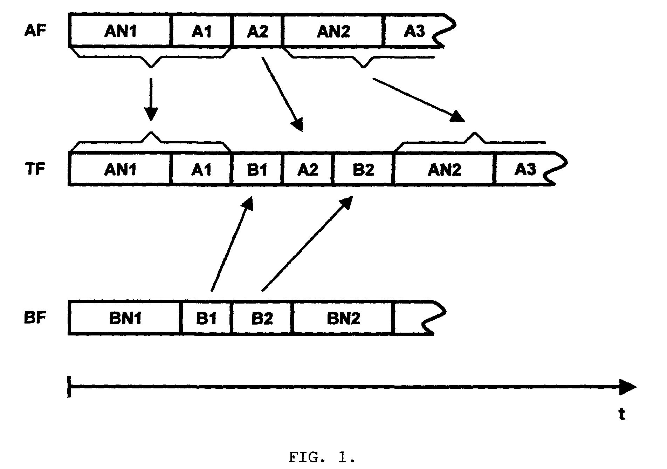

Two advantageous examples of possible applications of the method are drafted below. The attached figure shows an example of how the demanded educational film (TF) is created applying the method described in this invention.

The first process we introduce is based on manual editing. This process and similar ones are advantageous when we use the method for the creation of teaching aids. In case of digital editing our base material can be a DVD disk that has no copy protection and contains the film and at least two speech tracks of different languages. Subtitles are optional. Certainly we can use the described method on any other kind of digital sources e.g. on AVI or MPEG files. Additionally we need an editing machine to be able to apply the process. The hardware of a simple editing machine can be a computer with a DVD reader and writer. Last but not the least we need an editor-software (e.g.: MAGIX Movies on CD & DVD 2004) and an empty, writable DVD for the result. Before we go into the details of the process description it worth to have a look at the attached figure because it makes it much easier to understand the process. Although we know that a DVD contains the frames of a film only once and the different language tracks are stored separately from the film we deal with the film and its voice as an entity that cannot be divided. This simplification makes it easier to focus on the key elements of the process. This is why AF means the original film when it is speaking language "A" and BF the original film when it is speaking language "B" in the figure. In the middle of the picture we can see the result of the method that is the educational film together with its sound and voice designated by TF. Small "t" indicates the time axis and shows that the films start at the left side of the figure.

The description of the first implementation example of the method covered by this invention starts here:
1. Select the first part of AF. The selection should contain the first language teaching relevant segment A1 of AF.
   This selection normally starts at the beginning of AF and ends at the end of the first language teaching relevant segment A1 of AF. This results the selection of both AN1 and A1 in the example shown in the attached figure.
2. Copy the selected part of AF to TF. This means that AF and TF start with the same part.
3. Select the translation of the recently copied language teaching relevant part of AF from BF. This means the selection of B1 in the attached figure for the first time.
4. Copy the selected part of BF to the end of TF. This step appends B1 to A1 in the attached figure in the first case. (The same step causes to copy B2 after A2 during second run.)
5. Select the next part of AF. The selection includes the next language teaching relevant part of AF and ends close to the end of the language teaching relevant part. The selection normally begins close to the end of the previously copied part of AF. This is A2 in the example shown in the attached figure. Whenever a language teaching relevant part is longer than 20 seconds it should be split into more pieces and handled as separate language teaching relevant parts (e.g. A1 and A2 on the figure).
6. Append the recently selected part of AF to the end of TF.
7. Continue the process from step 3 until all language teaching relevant part of the film is processed.
8. Select the rest of the film, which is useless from the point of view of language teaching from AF. This is typically the casting.
9. Copy the selected part to the end of TF to make the film complete.
10. Burn TF onto a DVD so we have the master copy of the teaching aid.

The core of the demonstrated process is step 3,4,5 and 6. Step 3 selects B2 beside B1 during the process. Step 5 selects AN2 together with A3 beside A2. Note that those parts of "B" language speaking film that are irrelevant from the point of view of language teaching - BN1 and BN2 on the figure - will not be copied by the process. This is how the process avoids the duplication of language teaching irrelevant parts of the film. Certainly it is not mandatory to copy language teaching irrelevant parts of the film from the "A" language-speaking version of the film. It is also acceptable if the editor chooses the "B" language-speaking version as the source of language teaching irrelevant parts of the film. Nevertheless our experiment showed that it is advantageous to use AF for such a source because this solution results fewer cuts in the film that leads to better understanding during the playback of the produced teaching material. It is also suitable if we apply the above described method only on the most interesting parts of a film e.g. in order to limit the playing time of the teaching material or to make it more exciting. Another option for the process is the display of "B" language subtitles that may help the learner to completely understand the foreign speech.
The major advantage of the above-described process is that the produced educational film has very high quality and is ready for full production. The film produced with this process can be a wide-spreading product because no computer is required for its usage. E.g. a home DVD or VHS cassette player is sufficient.

The second example application is the usage of a special computer program in order to play commercial DVDs according to the method described in this invention. The software can run on a computer or as embedded software it can be part of an intelligent DVD player for example. We will focus on the computer-based solution below. We need a computer with a DVD reader and a DVD disk that contains the film of our interest (with the voices of our preferred languages) to be able to apply the second process. Additionally we need that special computer program, which is able to play the inserted DVD on this special way. It is quite simple to apply the process from the point of view of the user who has the above-mentioned special software on his/her computer: the user has to insert the DVD into the reader, start the special application and select the film and the two languages he/she want to hear. Certainly this special piece of software is currently not available on the market but we can show that a computer scientist is able to produce such a computer program. Imagine that our software developer want to implement a solution that works on the popular Microsoft Windows platform. The developer can use Microsoft Visual Basic 6.0 as programming language and the Microsoft DirectShow MSWebDVD component as an interface to the DVD player. The MSWebDVD component makes it possible to start, stop DVD playing, change the currently used language or seek to a position from software. So it provides all of the operations we need for automatic digital editing. The DirectSoundCapture8 component of the DirectX 8 package makes it possible to access the waveform of the currently played sound if the mixer was set up correctly. This makes it possible to implement an algorithm that automatically recognizes those parts of the film that are relevant from the point of view of language teaching and need to be repeated on the other language. Tracking the current loudness of the digitally filtered sound is a simple solution for the recognition of language teaching relevant parts of a film. Those parts where is no sound are obviously unimportant from the point of view of language teaching so they should not be repeated on the other language. Those parts of the film that are loud can be treated as language teaching relevant parts. When short silence between sentences can be detected then they can be used as proper cut positions. Long language teaching relevant parts can be split into shorter segments with the aid of timers. Certainly more sophisticated solutions can be implemented for automatic recognition of language teaching relevant parts but these are not covered by this invention. This invention focuses on the method how the different parts of the source films have to be copied or played after each other regardless of the way how we recognize the language teaching relevant parts of the films. Anyhow software-based recognition does not understand the speech so it can assume that the translation of a group of sentences is available within the same time range of the translated film. This is one of the reasons why the software-based solution will not provide the same quality as manual editing. The major advantage of this application of the method is that once such software is available all existing films published on DVD can be used for learning foreign languages. So the solution provides practically inexhaustible amount of language teaching material.
The method described in this invention significantly increases the duration of the film. In worst case the playtime of a film can be doubled so in case of long films the learner should consider one or more breaks. In case of learners with high level of foreign language knowledge reverse playback order of segments can also be useful. This means that the well-known language comes after the foreign language. This way the learner can verify if he/she understood the thought correctly.

The most important advantage of the method covered by this invention is that it offers teaching material, which makes it possible for learners to learn the expressions of foreign languages with ease through interesting situations of popular films even if the learners have only a very limited knowledge of the learnt language. The expressions are shown in appropriate context, which helps a lot in correct interpretation and memorization. The learner understands the context and the whole story even if he/she does not understand the foreign language. This attribute of the produced material ensures long lasting interest and results a more effective learning technique.

### Description of signs used on the drawing

- A1:: 1^{st} "A" language speaking, language teaching relevant segment of the film
- A2:: 2^{nd} "A" language speaking, language teaching relevant segment of the film
- A3:: 3^{rd} "A" language speaking, language teaching relevant segment of the film
- AF:: "A" language speaking film (contains the same frames as BF)
- AN1:: 1^{st} "A" language speaking, language teaching irrelevant segment of the film
- AN2:: 2^{nd} "A" language speaking, language teaching irrelevant segment of the film
- B1:: 1^{st} "B" language speaking, language teaching relevant segment of the film
- B2:: 2^{nd} "B" language speaking, language teaching relevant segment of the film
- BF:: "B" language speaking film (contains the same frames as AF)
- BN1:: 1^{st} "B" language speaking, language teaching irrelevant segment of the film
- BN2:: 2^{nd} "B" language speaking, language teaching irrelevant segment of the film
- TF:: educational film (the produced teaching material)
- t:: time axis

### Registered Trademarks

Microsoft and Windows are registered trademarks of the Microsoft Corporation in the USA and/or other countries.

MAGIX is registered trademark of MAGIX AG

## Claims

1. A method that is useful for audio-visual teaching of foreign languages and for producing language teaching aid, **characterized in that** it plays or modifies a film or a part of it so that language teaching relevant parts of the film are cut into pieces that are shorter than 20 seconds and are shown twice where the second play comes right after the first but the language of the second play differs from the first one.

2. A method according to claim 1, **characterized in that** foreign language subtitles are displayed.
